# EUROPEAN PATENT APPLICATION

(11) **EP 4 609 971 A1**
(43) Date of publication of application: **03.09.2025**
(21) Application number: 24425005.6
(22) Date of filing: 01.03.2024
(51) Int. Cl.: B22F 10/25, B22F 12/00, B22F 12/44, B22F 12/45, B23K 26/342, B23P 6/00, B33Y 10/00, B33Y 30/00

(54) **DIRECTED ENERGY DEPOSITION SYSTEM AND METHODS FOR COMPONENT REPAIRS**

(71) Applicant: GE Avio S.r.l., 10040 Rivalta di Torino (TO) (IT)
(72) Inventor: Campagna, Silvia Maria, 10040 Rivalta di Torino (TO) (IT); Alfeo, Giovanni, 72100 Brindisi (IT); Longo, Giulio Antonio, 72100 Brindisi (IT); Corigliano, Simona, 72100 Brindisi (IT); Maggipinto, Gianluca, 72100 Brindisi (IT); Di Toma, Vincenzo, 28043 Cameri (NO) (IT); Posa, Domenico, 10040 Rivalta di Torino (TO) (IT)
(74) Representative: Openshaw & Co.

(57) **Abstract**

A Directed Energy Deposition (DED) system may include a nozzle (104) that deposits metallic powder onto a plurality of locations of a repair area (114). A first energy source (102) is configured to output a first energy beam (108) from a first output end (103), which is positionable by one or more actuators to direct the first energy beam (108) onto the repair area (114) at a first angle or a second angle relative to a cavity axis to melt deposits of the metallic powder that are located at a first set of the plurality of locations or a second set of the plurality of locations. A second energy source (106) is configured to output a second energy beam (110) from a second output end (105) positioned to direct the second energy beam (110) onto the repair area (114) to melt deposits of the metallic powder that are located at the first and second set of the plurality of locations.

## Description

### TECHNICAL FIELD

These teachings relate generally to jet engines and more particularly to a directed energy deposition system and methods for repair of jet engine related components.

### BACKGROUND

Directed energy deposition (DED) systems employ an additive manufacturing process to perform repairs or construct metallic components. These systems deposit a metallic powder or similar material onto a substrate and apply a directed energy source such as a laser to the deposited material as it is deposited. The directed energy source melts and welds the materials to the substrate and/or previously laid layers of the previously melted and now solidified metallic powder.

### BRIEF DESCRIPTION OF DRAWINGS

Various needs are at least partially met through provision of the directed energy deposition system and methods for component repairs described in the following detailed description, particularly when studied in conjunction with the drawings. A full and enabling disclosure of the aspects of the present description, including the best mode thereof, directed to one of ordinary skill in the art, is set forth in the specification, which refers to the appended figures, in which:
FIG. 1 is a schematic view of a Directed Energy Deposition (DED) system in accordance with various embodiments;
FIG. 2 is a schematic view of the DED system of FIG. 1 with a nozzle and energy sources thereof positioned at a different angle with respect to a cavity axis in accordance with various embodiments;
FIG. 3 is a perspective view of a first and second energy source for the DED systems of FIGs. 1 and 2 in accordance with various embodiments;
FIG. 4 is a perspective view of an induction heating element for use with the DED systems of FIGs. 1 and 2 in accordance with various embodiments;
FIG. 5 is a schematic view of the DED system depositing metallic powder onto a repair area in a spiral deposition pattern in accordance with various embodiments;
FIGs. 6 and 7 are schematic views of spiral deposition patterns in accordance with various embodiments; and
FIG. 8 is a schematic cross-sectional view of a repair area of a part after being filled with a plurality of layers of melted and solidified metallic powder in accordance with various embodiments;
FIG. 9 is a schematic view of a spiral deposition pattern in accordance with various embodiments; and
FIG. 10 is flow diagram of a method in accordance with various embodiments.

Elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present teachings. Also, common but well-understood elements that are useful or necessary in a commercially feasible embodiment are often not depicted in order to facilitate a less obstructed view of these various embodiments of the present teachings. Certain actions and/or steps may be described or depicted in a particular order of occurrence while those skilled in the art will understand that such specificity with respect to sequence is not actually required.

### DETAILED DESCRIPTION

The terms and expressions used herein have the ordinary technical meaning as is accorded to such terms and expressions by persons skilled in the technical field as set forth above except where different specific meanings have otherwise been set forth herein. The word "or" when used herein shall be interpreted as having a disjunctive construction rather than a conjunctive construction unless otherwise specifically indicated. The terms "coupled," "fixed," "attached to," and the like refer to both direct coupling, fixing, or attaching, as well as indirect coupling, fixing, or attaching through one or more intermediate components or features, unless otherwise specified herein.

The singular forms "a", "an", and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

Currently known Directed energy deposition (DED) systems used for part repair employ a single energy source laser beam or the like to melt and join metallic deposits to a repair area. The repair area is typically a flat surface region in which successive layers of the deposited and melted metal material are built up to reconstruct or repair thin wall areas of the part. Furthermore, these DED systems employ secondary directed energy sources only for preheating purposes and utilize linear or similarly simple tool paths when depositing the metallic material. These features can all pose issues for repairing more complicated jet engine related components or the like where the repair area includes a concave cutout region with angled side walls.

Generally speaking, the various aspects of the present disclosure can be employed with a DED system having a nozzle for depositing metallic powder such as titanium aluminide powder or similar onto a plurality of locations of a repair area of a part according to a preconfigured deposition pattern. In some aspects, first and second energy sources are positioned and/or angled at different locations relative to the repair area and activated throughout the preconfigured deposition pattern to melt deposits of the metallic powder that are located at different sets of the plurality of locations according to the preconfigured deposition pattern. In particular, the DED system and methods described herein may be utilized to perform build-up repairs in cavity shape geometries using Laser Metal Deposition technology to restore titanium aluminide components affected by internal defects such as turbine blades of jet engines or the like. The repair area may be characterized by a concave or partially U-shaped cavity having angled side walls. This cavity may be obtained on the titanium aluminide component by removing the internal defect with a boring tool or similar. The DED system described herein can include a multi-jet Laser Metal Deposition system made of a primary laser beam source directed to the repair area through and concentric with a primary nozzle used to deposit the metallic powder and a secondary laser beam source. Both sources contribute to the melting of the metallic titanium aluminide powder deposited on the repair area through the primary nozzle. In some cases, an induction heating system is used to locally pre-heat the repair area to a target heating temperature to avoid crack formation in the filled cavity resulting from thermal gradients. The preconfigured deposition pattern can include a bi-directional spiral deposition strategy for filling the cavity. The bi-directional spiral deposition pattern is advantageous in filling a repair area cavity that includes oblique perpendicular walls. These types of cavities are useful in removing internal defects located inside of a part as opposed to surface level defects that can be cut out and easily filled with less complex deposition strategies employed by current systems. Furthermore, the alternating bi-directional start point nature of the spiral deposition pattern and the spiral nature of the pattern itself help to provide a good thermal distribution of the melted metallic powder as it cools. This thermal distribution helps to ensure uniformity in the final solidified mass of the metallic powder and adhesion of that mass to the repair area.

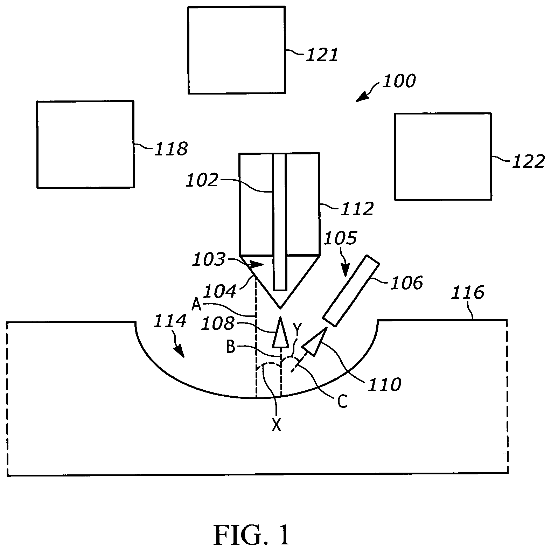

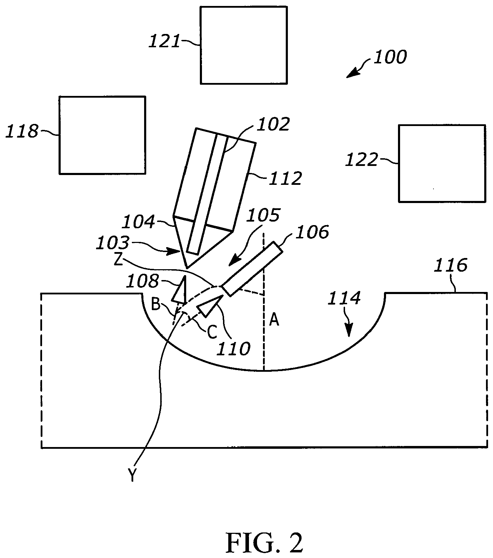

The foregoing and other benefits may become clearer upon making a thorough review and study of the following detailed description. Referring now to the drawings, and in particular to FIG. 1 and FIG. 2, a DED system 100 that is compatible with many of these teachings will now be presented. The DED system 100 includes a first energy source 102, a nozzle 104, and a second energy source 106. In some embodiments, the first energy source 102 and the second energy source 106 include laser energy sources, but other substitute directed energy sources known in the art may also be utilized.

The nozzle 104 is configured to deposit metallic powder such as titanium aluminide powder onto a plurality of locations of a repair area 114 of a part 116 when moved according to a preconfigured deposition pattern. The part 116 can include a component of turbine engine such as a fan blade, rotor blade, stator blade, etc. In some embodiments, as described in more detail below the repair area can include a cavity that is cut out of the surface of the part 116 where there are internal or external defect in the repair area 114. The first energy source 102 is configured to output a first energy beam 108 from a first output end 103 thereof. The first energy source 102 and/or the output end thereof is positionable to direct a central axis B of the first energy beam 108 onto the repair area 114 at a first angle X relative to a cavity axis A of the repair area 114. The cavity axis A is located at and extends normal to a surface of a center of the repair area 114. The first energy beam 108 positioned at the first angle X is used to melt deposits of the metallic powder that are located at a first set of the plurality of locations. As seen in FIG. 2, the first energy source 102 and/or the output end thereof can be positioned to direct the central axis B of the first energy beam 108 onto the repair area 114 at a second angle Z relative to a cavity axis A. The first energy beam 108 positioned at the second angle Z is used to melt deposits of the metallic powder that are located at a second set of the plurality of locations. The second angle Z is different from the first angle X. In some embodiments, the first angle X is in a range of about 0 degrees to about 5 degrees and the second angle Z is in a range of about 5 degrees to about 20 degrees.

The second energy source 106 is configured to output a second energy beam 110 from a second output end 105 thereof. The second energy source 106 and/or the second output end 105 thereof is positioned to direct a central axis C of the second energy beam 110 onto the repair area 114 of the part 116 at a third angle Y relative to the central axis B of the first energy beam 108. In some embodiments, the third angle Y is in a range of about 30 degrees to about 40 degrees. The second energy source 106 is activated alongside the first energy source 102 and is used to melt deposits of the metallic powder that are located at both the first set of the plurality of locations and the second set of the plurality of locations. Additionally, the first energy source 102 and/or the second energy source 106 can be activated prior to the nozzle 104 depositing material onto the repair area 114 so as to preheat the repair area 114 to a preset temperature.

As shown in FIGS. 1 and 2 the first energy source 102 and the nozzle 104 can be collocated within a housing 112. In some embodiments, the first energy source 102 and the nozzle 104 can be in concentric relationship. However, in some embodiments, the first energy source 102 and the nozzle 104 are distinct components with sperate respective housings that are independently maneuverable.

Furthermore, the DED system 100 can include a boring tool 118 or similar machine tool that is configured to form the repair area 114. The boring tool 118 can be a distinct element from the first energy source 102, the nozzle 104, and/or the second energy source 106. The boring tool 118 can be configured to form the repair area 114 in the part as a symmetrical cavity. In some examples, the cavity has a maximum depth in a range of about 4mm to about 7mm. This symmetrical cavity can also include walls disposed at an angle in a range of about 5 degrees to about 20 degrees with respect to the cavity axis A. In other examples, the cavity can have a different depth and/or walls at different angles. The dimensions of the cavity described herein are particularly beneficial for minimizing the amount of removed material with respect to internal porosity defects in the part 116. In particular, the shape and dimensions of the cavity minimizes the amount of build-up material to deposit on the part 116, and therefore the material/mechanical impact of the repair. Also, these dimensions limit the lead time for depositing the material onto the repair area 114.

Furthermore, the DED system 100 includes at least one actuator 121 or a similar precision movement device for positioning the first energy source 102, the nozzle 104, and/or the second energy source 106 according to the preconfigured deposition patterns and at least at the angles X, and Z shown in FIGS. 1 and 2. A controller 122 is in electrical communication with the at least one actuator 121 and directs the at least one actuator 121 to positioning the first energy source 102, the nozzle 104, and/or the second energy source 106 according to the preconfigured deposition pattern. The controller 122 can also be configured to activate the first energy source 102 and the second energy source 106 to emit the first energy beam 108 and the second energy beam 110, respectively. Similarly, the controller 122 can direct the flow rate of the metallic powder out from the nozzle 104.

The controller 122 can include one or more processors, which may include, for example, a microprocessor, a system-on-a-chip, an application specific integrated circuit (ASIC), and/or a field programmable gate array (FPGA). The controller 122 can also include memory, which can store program instructions relating to the preconfigured deposition patterns and which may include, for example, an electrical charge-based storage media such as electrically erasable programmable read-only memory (EEPROM) or random access memory (RAM), or other non-transitory computer readable media such as an optical or magnetic based storage device.

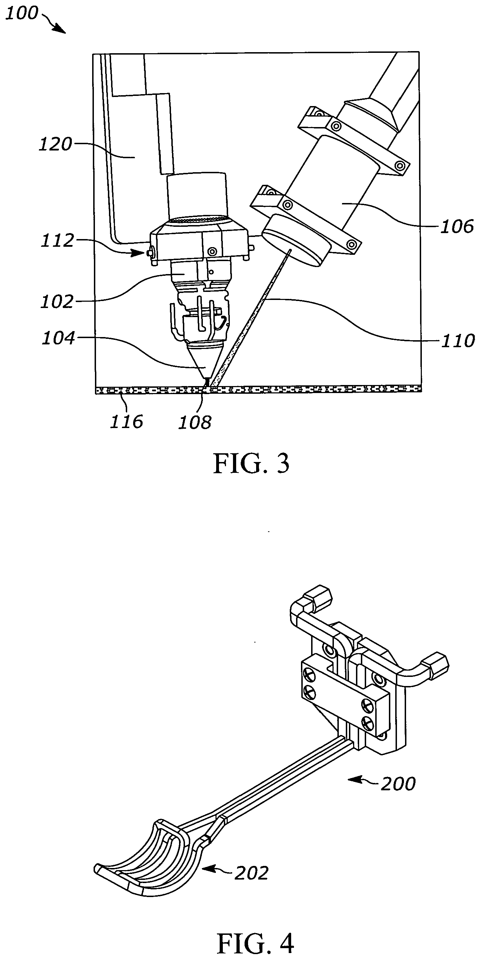

As shown in FIG. 3, the housing 112 that contains both the first energy source 102 and the nozzle 104 is secured to a support structure 120 along with the second energy source 106. In this way the angle Y (FIGs. 1 and 2) of the central axis C (FIGs. 1 and 2) of the second energy beam 110 can be fixed relative to the central axis B (FIGs. 1 and 2) of the first energy beam 108 of the first energy source 102. Furthermore, changes in the position of the output ends 103 and 105 (FIGs. 1 and 2) of the first energy source 102 and the second energy source 106 follow the preconfigured deposition pattern as described herein can be facilitated by movement of the support structure 120 using the at least one actuator 121 as directed by the controller 122.

In some embodiments, the DED system 100 can include an induction heating element 200 as shown in FIG. 4. The induction heating element 200 is configured to apply electro-magnetic waves to the repair area 114 (FIG. 1) at the direction of the controller 122 to begin heating the repair area 114 (FIG. 1) to a target heating temperature prior to the nozzle 104 (FIG. 1) depositing the metallic powder onto the plurality of locations of the repair area 114 (FIG. 1). When activated by the controller 122, the induction heating element 200 generates an alternating electromagnetic field that induces eddy currents in the part 116, which heats the part 116 by Joule Effect. The induction heating element 200 is configured to account for the shape of the part 116 and the repair area 116 that is being pre-heated, physical constraints of the DED system 100 (e.g., clashes with other components of the DED system 100 and/or with the part 116), to output desired power and frequency values for the alternating electromagnetic field, and to generate the target temperature ate the repair area 114. In some embodiments, the induction heating element 200 can continue to heat the repair area 114 while the metallic powder is being deposited and melted according to the preconfigured deposition pattern. In some embodiments, the induction heating element includes a heating section 202 that has a geometry that is matched to a geometry of the repair area 114 (FIG. 1). For example, the heating section 202 can be configured to rest inside of the repair area 114 (FIG. 1) and/or around the exterior of the repair area 114 (e.g., from a bottom of the part 116 of FIG. 1) so as to apply the electro-magnetic waves to the repair area 114.

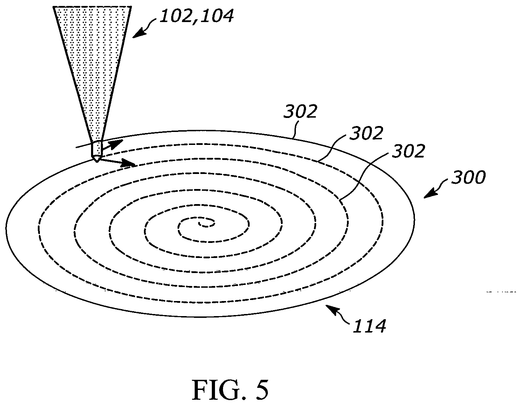

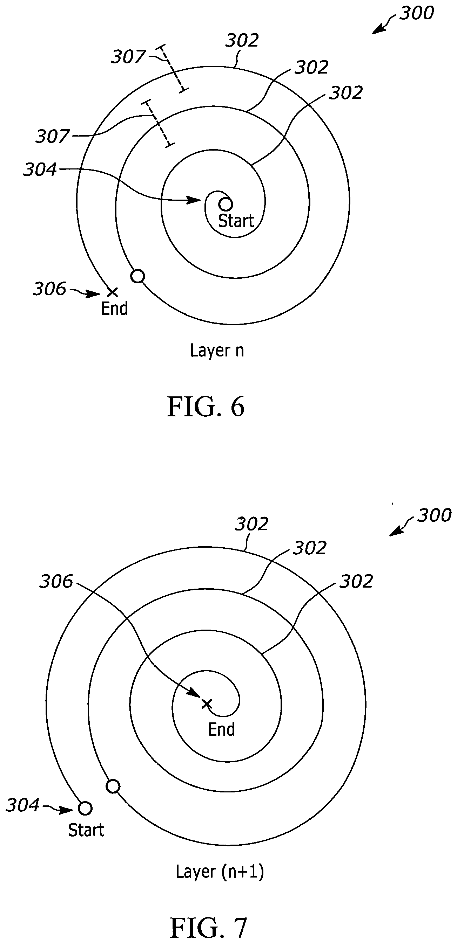

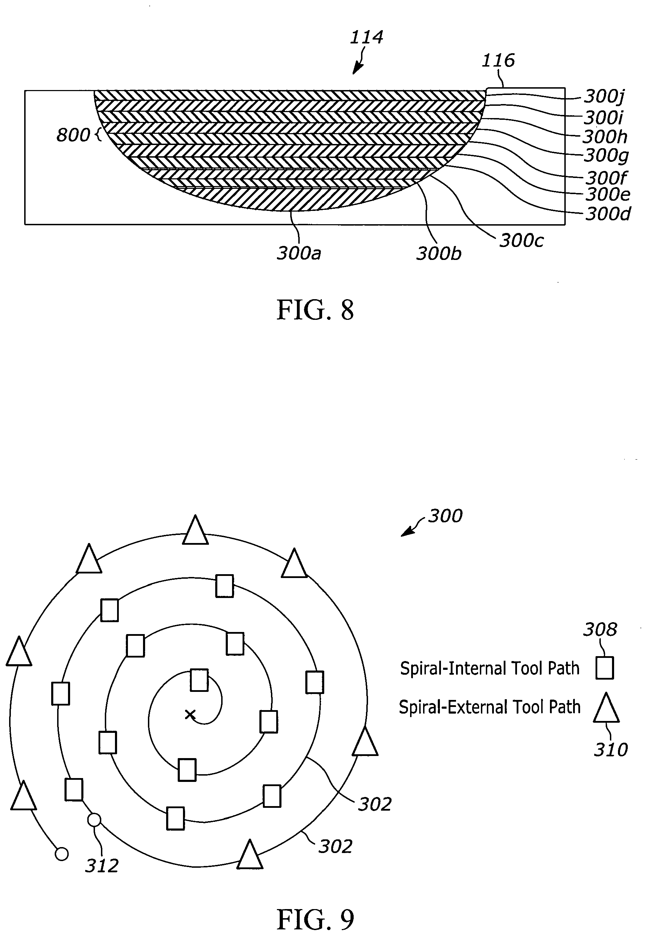

With reference now to FIG. 5, it is shown that, in some embodiments, the preconfigured deposition pattern includes moving the nozzle 104 to deposit the metallic powder onto the repair area 114 in a plurality of spiral patterned layers 300. In particular, the nozzle 104 is moved along the repair area 114 according to the preconfigured deposition pattern to deposit the metallic powder in tracks 302 that when viewed together form a spiral pattern moving between a starting point 304 and an end point 306 of each of the plurality of spiral patterned layers 300 (see FIGs. 6 and 7). As the metallic powder is deposited the first energy source 102 and the second energy source 106 are both activated to melt the deposited powder to create a metallic layer that is bonded to the repair area 114 itself or a previously laid down metallic layer formed from the melted and solidified metallic powder (see e.g., FIG. 8).

As shown in FIGs. 6 and 7, the starting point 304 of each of the plurality of spiral patterned layers 300 can alternate between an internal location as shown in FIG. 6 that is aligned based on the cavity axis A (FIG. 1) and an external location aligned as shown in FIG. 7 based on a periphery of the repair area 114 (FIG. 1) present at each of the plurality of spiral patterned layers 300. Furthermore, the end point 306 alternates in the opposite manner of the starting point 304. The initial layer of the plurality of spiral patterned layers 300 can start at the internal location or the external location. Alternating the starting point 304 and end point 306 in this manner can assist in uniformly cooling the melted layers of metallic powder and provide for a uniform thermal distribution between and across the plurality of spiral patterned layers 300.

As shown in FIG. 8, the repair area 114 of the part 116 is filled up by each of the plurality of spiral patterned layers 300 after those layers are laid down, melted by the first energy source 102 and the second energy source 106 and cooled to form a solid metallic block joined with the part 116. In this example, the repair area 114 is filled with ten spiral patterned layers labeled 300a-300j. However, in other examples, the repair area 114 can be filled with more or fewer spiral patterned layers, which may be dependent on the depth of the repair area 114. As shown in FIG. 8, a total width and/or two-dimensional area of each of the plurality of spiral patterned layers 300a-300j increases from the initially laid layer 300a upward as the repair area 114 (FIG. 1) is slowly filled up with the solidified layers of the previously melted metallic powder. This increase in width and/or two-dimensional area will track the increasing width and/or two-dimensional area of the repair area 114 from a bottom thereof to a top section aligned with the non-cutout portion of the part 116 (see FIG. 1 and FIG. 8).

With reference to FIGs. 5-8, in some embodiments, the preconfigured deposition pattern can include about 10 to about 20 spiral patterned layers 300. Furthermore, each of the tracks 302 of the plurality of spiral patterned layers 300 can have a width 307 that is dependent on a first power output of the first energy source 102 (FIG. 1), a second power output of the second energy source 106 (FIG. 1), a rate at which the nozzle 104 deposits the metallic powder, and/or a vertical distance 800 (FIG. 8) between each of the plurality of spiral patterned layers 300. In some embodiments, the first power output of the first energy source 102 is in a range of about 50 Watts to about 500 Watts and the second power output of the second energy source 106 is in a range of about 50 Watts to about 500 Watts. The first and second power outputs can be the same or different. The deposition rate of the metallic powder from the nozzle 104 can be in a range of about 0.5 g/s to about 2 g/s. Furthermore, the vertical distance 800 (FIG. 8) between each of the plurality of spiral patterned layers 300 can be in a range of about 0.3 mm to about 0.7 mm. These variables can result in a width of the tracks 302 that is in a range of about 1 mm to about 3.5 mm. This combination of specific process parameters can result in repaired version of the part 116 without deposit induced internal defects (e.g., missing material, porosity, cracks, inclusions, etc.), with good adhesion between the deposited material and the original base metal of the part 116 (e.g., a lack of fusion defects), and a cavity that is completely filled with deposited material.

In some embodiments, movement of the nozzle 104 according to the preconfigured deposition pattern by the at least one actuator 121 and the controller 122 to deposit the metallic powder in the plurality of spiral patterned layers 300 can be configured such that there is at least some overlap in the widths 307 of each of the tracks 302 of each of plurality of spiral patterned layers 300 as shown in FIG. 6. This overlap can help to produce a solid and cohesive metallic mass within and joined to the repair area 114 (FIG. 1 and FIG. 8) after the operation of the DED system 100 is completed. In some embodiments, the overlap between the tracks 302 is in a range of about 1.0 mm to about 2.5 mm.

With reference now to FIGS. 1, 2, and 9, in some embodiments, the first set of the plurality of locations at which the first energy beam 108 is positioned at the first angle X (FIG. 1) includes all of the plurality of locations on a first group of the plurality of spiral patterned layers and interior portions 308 (FIG. 9) of a second group of the plurality of spiral patterned layers. The second set of the plurality of locations at which the first energy beam 108 is positioned at the second angle Z (FIG. 2) includes exterior portions 310 (FIG. 9) of the second group of the plurality of spiral patterned layers. The first group of the plurality of spiral patterned layers 300 can include layer number 1 to layer number 7 and the second group of the plurality of spiral patterned layers 300 can include layer numbers 8 and above. For example, each of the plurality of spiral patterned layers 300 numbered 1-7 would be constructed by having the energy beam 108 positioned at the first angle X to melt deposits of the metallic powder laid down by the nozzle 104 for the entirety of the spiral pattern layer. Furthermore, for layers 8 and above, the interior portions 308 of each spiral pattern deployment are constructed by the energy beam 108 at the first angle X as with layers number 1-7, while the outer portions of layers 8 and above are constructed by the energy beam 108 positioned at the second angle Y. The angle of the first energy beam 108 is changed to account for the incline in the walls of the repair area 114 and to helps to promote proper melting and adhesion of the metallic powder to the repair area 114 and/or to previously deposited layers with a similar incline. It will be appreciated that the specific number of layers in the first set and the second set may change based on the specific dimensions of the cavity carved out to form the repair area 114. For example, a smaller cavity with more steeply inclined walls may have fewer layers in the first set than a larger cavity with a gradual wall incline.

As shown in FIG. 9, the angle of the first energy beam 108 can transition between the first angle X (FIG. 1) and the second angle Z (FIG. 2) at a transition point 312 of the tracks 302 of the plurality of spiral patterned layers 300 that are in the second group. In some embodiments, the exterior portions 310 can correspond to locations near the inclined walls of the repair area 114. As described herein, the incline of the walls can have an angle of about 5 degrees to about 20 degrees relative to the cavity axis A (FIGs. 1 and 2). In some embodiments, the second angle Z can match the angle of incline. The combination of the inclined walls and the inclination of the first energy beam 108 and/or the second energy beam 110 facilitate dilution of the deposited material on the repaired area 114, and obtain a good quality deposit thereon. The ideal deposition is the one where repair area is perpendicular to the inclination of the energy source, but this condition cannot be obtained for defects such as internal porosities. The specific inclination of the cavity walls and angles of the energy beams 108 and 110 are thus selected to reach a compromise between minimizing the amount of material removed from the part 116 and obtaining a good quality deposit.

Furthermore, the transition point 312 can be set at different points on each of the plurality of spiral patterned layers 300 that are in the second group and can correspond to locations where the repair area 114 or the previously laid layers are displaced from the inclined walls and are relatively flat in comparison (e.g. having an incline that is less than about 5 degrees). In some embodiments, the distance between the transition point 312 and inclined walls of the repair area 114 can be in a range of about 1mm to 3.5mm. Changing the angle of the first energy beam 108 based on the incline in the walls of the repair area 114 helps to promote adhesion of the melted metallic powder to the repair area 114 and/or to previously deposited layers with a similar incline.

In some embodiments, the angle of the first energy beam 108 can be continuously changed throughout the tracks 302 so that the central axis B of the first energy beam 108 generally maintains a perpendicular relationship with the immediate area of the repair area 114 on which the nozzle 104 is depositing the metallic powder. This continuous change in the angle of the first energy beam 108 can be preprogramed based on known contours of the repair area 114 or can be dynamically determined using feedback from a sensor that determines the angle of inclination of the immediate area of the repair area 114 on which the nozzle 104 is depositing the metallic powder.

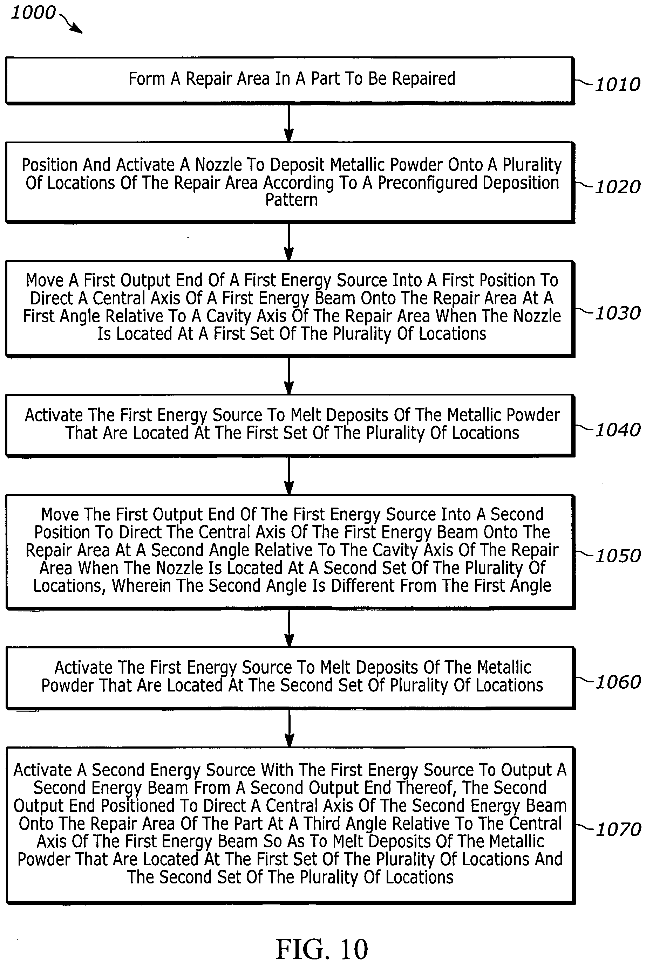

With reference to FIGs. 1, 2, and 10, the DED system 100 described herein can also be utilized in conjunction with a method 1000 for repairing the part 116. The method includes forming the repair area 114 in the part 116, as in 1010. For example, the repair area 114 can be formed with the boring tool 118 in the part 116 as described herein. Then, the method 1000 includes positioning and activating the nozzle 104 to deposit the metallic powder onto the plurality of locations of the repair area 114 according to the preconfigured deposition pattern, as in 1020. For example, the controller 122 can direct the at least one actuator 121 to move the nozzle 104 according to the preconfigured deposition pattern and/or control the flow rate at which the metallic powder is deposited onto the repair area 114. The method 1000 also includes moving the first output end 103 of the first energy source 102 into a first position to direct the central axis B of the first energy beam 108 onto the repair area 114 at the first angle X relative to the cavity axis A when the nozzle 104 is located at a first set of the plurality of locations, as in 1030. Further, the method 1000 includes activating the first energy source 102 to melt the deposits of the metallic powder that are located at the first set of the plurality of locations as the metallic powder is being deposited at those positions by the nozzle 104, as in 1040. The method 1000 also includes moving the first output end 103 of the first energy source 102 into the second position to direct the central axis B of the first energy beam 108 onto the repair area 114 at the second angle Z relative to the cavity axis A of the repair area 114 when the nozzle 104 is located at the second set of the plurality of locations and activating the first energy source 102 to melt deposits of the metallic powder that are located at the second set of the plurality of locations as the metallic powder is being deposited at those positions by the nozzle 104, as in 1050 and 1060. Finally, the method 1000 includes activating the second energy source 106 with the first energy source 102 to output the second energy beam 110 from a second output end 105 thereof, as in 1070. As described herein, the second output end 105 of the second energy source 106 is positioned to direct the central axis C of the second energy beam 110 onto the repair area 114 at the third angle Y relative to the central axis B of the first energy beam 108 so as to melt deposits of the metallic powder that are located at the first set of the plurality of locations and the second set of the plurality of locations as the metallic powder is being deposited at those positions by the nozzle 104. In some embodiments, the method 1000 can also include activating the induction heating element 200 (FIG. 4) to apply electro-magnetic waves to the repair area 114 so as to heat the repair area 114 to a target heating temperature prior to the nozzle 104 depositing the metallic powder onto the plurality of locations of the repair area 114.

The DED system 100 and method 1000 of operation provide improvements for repairing complicated defects in parts of jet engine related components or the like such as fan blades, rotor blades, stator blades, etc.. In particular, the use of the spiral pattern layers and multiple energy sources for melting metallic deposits enables the DED system 100 and related method 1000 to completely fill out concave cutout regions with angled side walls with a solid cohesive mass of metal.

Further aspects of the disclosure are provided by the subject matter of the following clauses:
A Directed Energy Deposition (DED) system comprising: a nozzle configured to deposit metallic powder onto a plurality of locations of a repair area of a part according to a preconfigured deposition pattern; a controller; a first energy source configured to output a first energy beam from a first output end thereof; and at least one actuator in electrical communication with the controller, the at least one actuator configured, at the direction of the controller, to: move the nozzle according to the preconfigured deposition pattern; position the first output end of the first energy source at a first position where a central axis of the first energy beam is directed onto the repair area at a first angle relative to a cavity axis of the repair area so as to melt deposits of the metallic powder that are located at a first set of the plurality of locations; position the first output end of the first energy source at a second position where the central axis of the first energy beam is directed onto the repair area at a second angle relative to a cavity axis of the repair area so as to melt deposits, of the metallic powder that are located at a second set of the plurality of locations, wherein the second angle is different from the first angle.

The DED system of any preceding clause further comprising a second energy source configured to output a second energy beam from a second output end thereof, wherein the controller is configured to direct the at least one actuator to position the second output end of the second energy source to direct a central axis of the second energy beam onto the repair area of the part at a third angle relative to the central axis of the first energy beam so as to melt deposits of the metallic powder that are located at the first set of the plurality of locations and the second set of the plurality of locations.

The DED system of any preceding clause further comprising a housing that contains the nozzle and the first energy source.

The DED system of any preceding clause further comprising an induction heating element, wherein the controller is configured to activate the induction heating element to apply electro-magnetic waves to the repair area to begin heating the repair area to a target heating temperature prior to the nozzle depositing the metallic powder onto the plurality of locations of the repair area.

The DED system of any preceding clause wherein the induction heating element includes a heating section having a geometry that is matched to a geometry of the repair area.

The DED system of any preceding clause further comprising a boring tool configured to form the repair area in the part as a symmetrical cavity having a maximum depth in a range of 4mm to 7mm, the symmetrical cavity including walls disposed at an angle in a range of 5 degrees to 20 degrees with respect to the cavity axis.

The DED system of any preceding clause wherein the preconfigured deposition pattern by which the actuator moves the nozzle to deposit the metallic powder onto the repair area includes a plurality of spiral patterned layers, wherein a starting point of each of the plurality of spiral patterned layers alternates between an internal location aligned based on the cavity axis and external location aligned based on a periphery of the repair area present at each of the plurality of spiral patterned layers.

The DED system of any preceding clause wherein the plurality of spiral patterned layers includes 10 layers to 20 layers.

The DED system of any preceding clause wherein a vertical distance between each of the plurality of spiral patterned layers is in a range of 0.3 mm to 0.7 mm.

The DED system of any preceding clause wherein individual tracks of each of the plurality of spiral patterned layers have an overlap with a previously deposited track from a same one of the plurality of spiral patterned layers, the overlap being in a range of 1.0 mm to 2.5 mm.

The DED system of any preceding clause wherein the first set of the plurality of locations includes all of the plurality of locations on a first group of the plurality of spiral patterned layers and interior portions of a second group of the plurality of spiral patterned layers, wherein the second set of the plurality of locations includes exterior portions of the second group of the plurality of spiral patterned layers.

The DED system of any preceding clause wherein the first group of the plurality of spiral patterned layers includes layer number 1 to layer number 7, and wherein the second group of the plurality of spiral patterned layers includes layer number 8 and above.

The DED system of any preceding clause wherein the first angle is in a range of 0 degrees to 5 degrees.

The DED system of any preceding clause wherein the second angle is in a range of 5 degrees to 20 degrees.

The DED system of any preceding clause wherein a first power output of the first energy source is in a range of 50 Watts to 500 Watts.

The DED system of any preceding clause wherein a second power output of the second energy source is in a range of 50 Watts to 500 Watts.

The DED system of any preceding clause wherein the controller directs the nozzle to deposit the metallic powder onto a plurality of locations at a rate of 0.5 g/s to 2 g/s.

A method for repairing a part using a Directed Energy Deposition (DED) system, the method comprising: forming a repair area in a part to be repaired; positioning and activating a nozzle to deposit metallic powder onto a plurality of locations of the repair area according to a preconfigured deposition pattern; moving a first output end of a first energy source into a first position to direct a central axis of a first energy beam onto the repair area at a first angle relative to a cavity axis of the repair area when the nozzle is located at a first set of the plurality of locations; activating the first energy source to melt deposits of the metallic powder that are located at the first set of the plurality of locations; moving the first output end of the first energy source into a second position to direct the central axis of the first energy beam onto the repair area at a second angle relative to the cavity axis of the repair area when the nozzle is located at a second set of the plurality of locations, wherein the second angle is different from the first angle; activating the first energy source to melt deposits of the metallic powder that are located at the second set of the plurality of locations.

The method of any preceding clause further comprising activating a second energy source with the first energy source to output a second energy beam from a second output end thereof, the second output end positioned to direct a central axis of the second energy beam onto the repair area of the part at a third angle relative to the central axis of the first energy beam so as to melt deposits of the metallic powder that are located at the first set of the plurality of locations and the second set of the plurality of locations.

The method of any preceding clause further comprising activating an induction heating element to apply electro-magnetic waves to the repair area so as to heat the repair area to a target heating temperature prior to the nozzle depositing the metallic powder onto the plurality of locations of the repair area.

The method of any preceding clause wherein the preconfigured deposition pattern includes directing the nozzle to deposit the metallic powder onto the repair area in a plurality of spiral patterned layers, wherein a starting point of each of the plurality of spiral patterned layers alternates between an internal location aligned based on the cavity axis and external location aligned based on a periphery of the repair area present at each of the plurality of spiral patterned layers.

The method of any preceding clause wherein the first set of the plurality of locations includes all of the plurality of locations on a first group of the plurality of spiral patterned layers and interior portions of a second group of the plurality of spiral patterned layers, wherein the second set of the plurality of locations includes exterior portions of the second group of the plurality of spiral patterned layers.

The method of any preceding clause wherein the first group of the plurality of spiral patterned layers includes layer number 1 to layer number 7, and wherein the second group of the plurality of spiral patterned layers includes layer number 8 and above.

The DED system or method of any preceding clause wherein the metallic powder includes titanium aluminide powder.

The DED system or method of any preceding clause wherein the first energy source and/or the second energy source are activated prior to the nozzle depositing material onto the repair area so as to preheat the repair area to a preset temperature.

The DED system or method of any preceding clause wherein the first energy source, the nozzle, and the second energy source are jointly coupled to a support structure and wherein movement of the support structure facilitates movement of the nozzle, the first output end, and the second output end.

The DED system or method of any preceding clause wherein the induction heating element continues to heat the repair area while the metallic powder is being deposited.

The DED system or method of any preceding clause wherein an initial layer of the plurality of spiral patterned layers starts at the internal location.

The DED system or method of any preceding clause wherein an initial layer of the plurality of spiral patterned layers starts at the external location.

The DED system or method of any preceding clause wherein a total width and/or two-dimensional area of each of the plurality of spiral patterned layers increases from the initially laid layer upward.

The DED system or method of any preceding clause wherein the position of the first output end that emits the first energy beam is continuously changed throughout the tracks of the plurality of spiral patterned layers so that the central axis of the first energy beam generally maintains a perpendicular relationship with the immediate area of the repair area 114 on which the nozzle is depositing the metallic powder.

## Claims

1. A Directed Energy Deposition (DED) system comprising:
a nozzle (104) configured to deposit metallic powder onto a plurality of locations of a repair area (114) of a part (116) according to a preconfigured deposition pattern;
a controller (122);
a first energy source (102) configured to output a first energy beam (108) from a first output end (103) thereof; and
at least one actuator (121) in electrical communication with the controller (122), the at least one actuator (121) configured, at the direction of the controller (122), to:
move the nozzle (104) according to the preconfigured deposition pattern;
position the first output end (103) of the first energy source (102) at a first position where a central axis of the first energy beam (108) is directed onto the repair area (114) at a first angle relative to a cavity axis of the repair area (114) so as to melt deposits of the metallic powder that are located at a first set of the plurality of locations;
position the first output end (103) of the first energy source (102) at a second position where the central axis of the first energy beam (108) is directed onto the repair area (114) at a second angle relative to a cavity axis of the repair area (114) so as to melt deposits of the metallic powder that are located at a second set of the plurality of locations, wherein the second angle is different from the first angle.

2. The DED system (100) of claim 1 further comprising a second energy source (106) configured to output a second energy beam (110) from a second output end (105) thereof, wherein the controller (122) is configured to direct the at least one actuator (121) to position the second output end (105) of the second energy source (106) to direct a central axis of the second energy beam (110) onto the repair area (114) of the part (116) at a third angle relative to the central axis of the first energy beam (108) so as to melt deposits of the metallic powder that are located at the first set of the plurality of locations and the second set of the plurality of locations.

3. The DED system (100) of claim 1 or 2 further comprising an induction heating element (200), wherein the controller (122) is configured activate the induction heating element to apply electro-magnetic waves to the repair area (114) to begin heating the repair area (114) to a target heating temperature prior to the nozzle (104) depositing the metallic powder onto the plurality of locations of the repair area (114).

4. The DED system (100) of claims 1, 2, or 3 further comprising a boring tool (118) configured to form the repair area (114) in the part (116) as a symmetrical cavity having a maximum depth in a range of 4mm to 7mm, the symmetrical cavity including walls disposed at an angle in a range of 5 degrees to 20 degrees with respect to the cavity axis.

5. The DED system (100) of any of claims 1-4 wherein the preconfigured deposition pattern by which the actuator moves directs the nozzle (104) to deposit the metallic powder onto the repair area (114) includes a plurality of spiral patterned layers (300), wherein a starting point (304) of each of the plurality of spiral patterned layers (300) alternates between an internal location aligned based on the cavity axis and external location aligned based on a periphery of the repair area (114) present at each of the plurality of spiral patterned layers (300).

6. The DED system (100) of claim 5 wherein a vertical distance (800) between each of the spiral patterned layers is in a range of 0.3 mm to 0.7 mm.

7. The DED system (100) of claim 5 wherein individual tracks (302) of each of the plurality of spiral patterned layers (300) have an overlap with a previously deposited track from a same one of the plurality of spiral patterned layers (300), the overlap being in a range of 1.0 mm to 2.5 mm.

8. The DED system (100) of claim 5 wherein the first set of the plurality of locations includes all of the plurality of locations on a first group of the plurality of spiral patterned layers (300) and interior portions (308) of a second group of the plurality of spiral patterned layers (300), wherein the second set of the plurality of locations includes exterior portions (310) of the second group of the plurality of spiral patterned layers (300).

9. The DED system (100) of claim 8 wherein the first group of the plurality of spiral patterned layers (300) includes layer number 1 to layer number 7, and wherein the second group of the plurality of spiral patterned layers (300) includes layer number 8 and above.

10. The DED system (100) of any preceding claim wherein the first angle is in a range of 0 degrees to 5 degrees.

11. The DED system (100) of any preceding claim wherein the second angle is in a range of 5 degrees to 20 degrees.

12. The DED system (100) of any preceding claim wherein a first power output of the first energy source (102) is in a range of 50 Watts to 500 Watts.

13. The DED system (100) of any preceding claim wherein the controller directs the nozzle (104) to deposit the metallic powder onto a plurality of locations at a rate of 0.5 g/s to 2 g/s.

14. A method (1000) for repairing a part (116) using a Directed Energy Deposition (DED) system, the method (1000) comprising:
forming a repair area (114) in a part (116) to be repaired;
positioning and activating a nozzle (104) to deposit metallic powder onto a plurality of locations of the repair area (114) according to a preconfigured deposition pattern;
moving a first output end (103) of a first energy source (102) into a first position to direct a central axis of a first energy beam (108) onto the repair area (114) at a first angle relative to a cavity axis of the repair area (114) when the nozzle (104) is located at a first set of the plurality of locations;
activating the first energy source (102) to melt deposits of the metallic powder that are located at the first set of the plurality of locations;
moving the first output end (103) of the first energy source (102) into a second position to direct the central axis of the first energy beam (108) onto the repair area (114) at a second angle relative to the cavity axis of the repair area (114) when the nozzle (104) is located at a second set of the plurality of locations, wherein the second angle is different from the first angle; and
activating the first energy source (102) to melt deposits of the metallic powder that are located at the second set of the plurality of locations.

15. The method (1000) of claim 14 further comprising activating a second energy source (106) with the first energy source (102) to output a second energy beam (110) from a second output end (105) thereof, the second output end (105) positioned to direct a central axis of the second energy beam (110) onto the repair area (114) of the part (116) at a third angle relative to the central axis of the first energy beam (108) so as to melt deposits of the metallic powder that are located at the first set of the plurality of locations and the second set of the plurality of locations.
